Europäisches Patentamt

European Patent Office

Office européen des brevets

(19)

(11) Veröffentlichungsnummer: **0 253 437**
**A2**

(12) **EUROPÄISCHE PATENTANMELDUNG**

(21) Anmeldenummer: 87201283.6

(22) Anmeldetag: 07.07.87

(51) Int. Cl.⁴: **H01B 11/22**

(30) Priorität: 18.07.86 DE 3624267

(43) Veröffentlichungstag der Anmeldung:
20.01.88 Patentblatt 88/03

(84) Benannte Vertragsstaaten:
AT CH DE FR GB IT LI NL

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **CH FR GB IT LI NL AT**

(72) Erfinder: **Wehner, Roderich**
**Buchheimer Strasse 25**
**D-5000 Köln 80(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Elektrischer Freileiter mit einer optischen Nachrichtenleitung.**

(57) Die Erfindung betrifft einen elektrischen Freileiter mit einem durch rohrförmig zusammengefügte elektrisch leitfähige Profilelemente gebildeten Hohlraum, in welchem eine optische Nachrichtenleitung geführt ist. Die Wasserdichtheit ist auch bei höheren Temperaturen dauerhaft dadurch sichergestellt, daß die tangential aneinanderliegenden Seitenflächen der Profilelemente (1) in Lägsrichtung verlaufende und sich gegenüberliegende Nuten (9) aufweisen, durch welche eine geschlossene Kammer gebildet ist, in welche eine elastisch komprimierte Dichtschnur (8) eingelegt ist.

Fig.1

## Elektrischer Freileiter mit einer optischen Nachrichtenleitung

Die Erfindung bezieht sich auf einen elektrischen Freileiter mit einem durch rohrförmig zusammengefügte elektrisch leitfähige Profilelemente gebildeten Hohlraum, in welchem eine optische Nachrichtenleitung geführt ist.

Ein Freileiter dieser Gattung ist durch Figur 5 der DE-PS 28 20 510 bekannt. Zur Verhinderung des Eindringens von Wasser ist dort der zentrale Hohlraum mit einem fettartigen Material gefüllt. Insbesondere bei höheren Temperaturen kann Fettmasse durch die Trennfugen zwischen den Profilelementen ausfließen, so daß dann die Schutzwirkung gegen das Eindringen von Wasser nicht mehr gewährleistet ist.

Der Erfindung liegt die Aufgabe zugrunde, den Freileiter der eingangs genannten Art derart zu gestalten, daß die Wasserdichtheit auch bei höheren Temperaturen dauerhaft sichergestellt ist.

Die Lösung gelingt dadurch, daß die tangential aneinanderliegenden Seitenflächen der Profilelemente in Längsrichtung verlaufende und sich gegenüberliegende Nuten aufweisen, durch welche eine geschlossene Kammer gebildet ist, in welche eine elastisch komprimierte Dichtschnur eingelegt ist.

Der Werkstoff für die Dichtschnur muß bei den höchst vorkommenden Temperaturen seine Elastizität beibehalten. Ohne nennenswerten Mehraufwand können die Dichtschnüre bei der Herstellung des von den Profilelementen gebildeten Hohlkörpers gleichzeitig mit eingelegt werden. Auf einfache Weise ergibt sich mit der erfindungsgemäßen Lösung eine auf Dauer zuverlässige Dichtwirkung gegen das Eindringen von Wasser in den die optische Nachrichtenleitung aufnehmenden zentralen Hohlraum. Eine dort gegebenenfalls eingebrachte gelartige Masse kann auch bei höheren Temperaturen nicht abfließen.

Eine bevorzugte Ausführungsart ist dadurch gekennzeichnet, daß die Innenkontur der Nuten im wesentlichen rechteckig und die der Dichtschnur kreisförmig ist, mit einem Durchmesser, der im entspannten Zustand größer als die tangentiale lichte Weite der die Dichtschnur aufnehmenden Kammer ist. Dabei ermöglicht der rechteckige Hohlraum, daß die Dichtschnur bei ihrer elastischen Verformung genügend Querschnittsraum zum Ausweichen hat.

Vorteilhaft ist es, daß die Tiefe der Nuten weniger als das 0,4fache ihrer Breite beträgt. Dadurch wird erreicht, daß die dichtende Anlage der Dichtschnüre vornehmlich an den Grundflächen der Nuten erfolgt.

Gute Ergebnisse zur Erzielung einer dauerhaften Dichtwirkung wurden dadurch erreicht, daß die Tiefe der Nuten das 0,4 bis 0,48fache des Durchmessers der Dichtschnur beträgt.

Auch ohne weitere Mittel zum formschlüssigen Ineinandergreifen der Profilelemente ließen sich in sich stabile und glatte rohrförmige Körper dadurch bilden, daß die Profilelemente mit einer Schlaglänge vom 7 bis 10fachen des Außendurchmessers des von ihnen gebildeten Hohlkörpers miteinander verdrallt sind.

Die Erfindung wird anhand der Beschreibung von in der Zeichnung dargestellten vorteilhaften Ausführungsbeispielen näher erläutert.

Figur 1 zeigt einen Querschnitt durch einen erfindungsgemäßen Freileiter

Figur 2 zeigt einen Teilquerschnitt mit einer bevorzugten Gestaltung einer geschlossenen Kammer zur Aufnahme einer Dichtschnur.

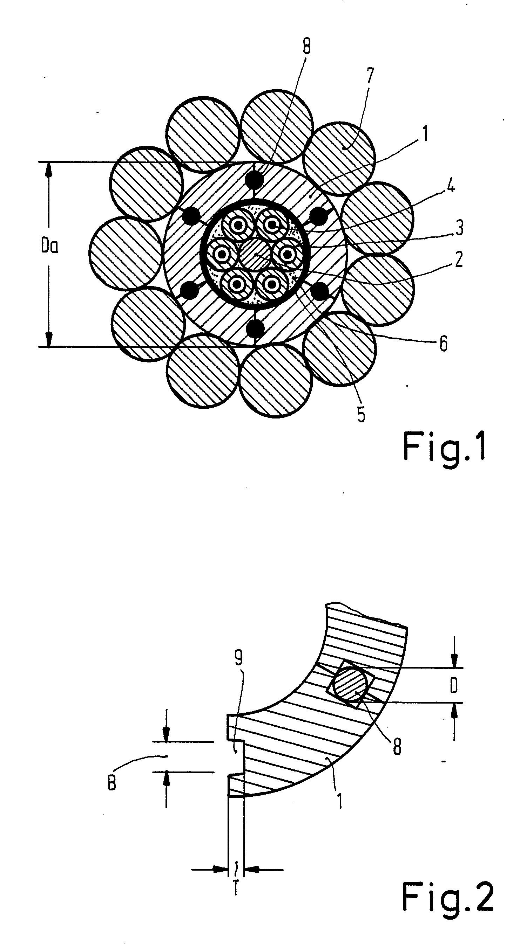

In Figur 1 wird durch sechs Profilelemente 1 ein zentraler Hohlraum gebildet, in welchem eine optische Nachrichtenleitung geführt ist. Um einen zugentlastenden Stützkörper 2 sind sechs Hohladern 3 mit je einem locker und mit Überlänge darin geführten LWL 4 verseilt. Natürlich kann eine Hohlader auch mehrere LWL enthalten. Die innerhalb der Mantelschicht 5 zwischen den Hohladern 3 verbleibenden Räume sind mit einer gelartigen Masse 6 gefüllt. Um den von den Profilelementen 1 gebildeten rohrförmigen Hohlkörper ist eine Lage von elektrisch leitfähigen Runddrähten 7 verseilt.

Die tangential aneinanderliegenden Seitenflächen der Profilelemente 1 weisen einander spiegelbildlich gleiche längsverlaufende Nuten auf, welche miteinander eine geschlossene Kammer bilden, in welche zur Erzielung einer Dichtwirkung elastische Dichtschnüre 8 eingebracht sind, welche zumindest in tangentialer Richtung elastisch stramm an den Profilelementen 1 anliegen.

Eine bevorzugte Ausführungsart der Nuten und einer Dichtschnur ist in Figur 2 dargestellt. Dabei haben die Nuten 9 einen im wesentlichen rechteckigen Querschnitt mit einer Tiefe T, welche das 0,45fache des Durchmessers D der Dichtschnur 8 beträgt, so daß die Dichtschnur 8 in eingebautem Zustand in tangentialer Richtung auf das 0,9fache ihres ursprünglichen Durchmessers zusammengedrückt ist. Da die Breite B das 1,3fache des Durchmessers D beträgt, kann das Material der Dichtschnur 8 vor allem in einen radialen Freiraum ausweichen, wobei sie eine elliptische Querschnittsform annimmt.

Vorteilhafte Werte der Tiefe T und der Breite B der Nut 9 hängen nicht nur von dem Durchmesser D der Dichtschnur 8 ab, sondern auch von deren spezifischen Materialeigenschaften wie insbesondere vom Elastizitätsmodul.

Besonders geeignete Materialen, welche auch bei höheren Temperaturen von 160° ihre Elastizität behalten, sind Silikone, Polyacrylate oder Fluorpolymere wie Viton. Die Profilelemente 1 wurden mit einer Schlaglänge vom 7 bis 10fachen des Außendurchmessers Da des von ihnen gebildeten Hohlkörpers verseilt. Bei dieser fertigungstechnisch noch gut erreichbaren relativ engen Verseilung ergibt sich ein guter Zusammenhalt der Profilelemente, welche miteinander glatte Oberflächen bilden. Bei dem Verseilvorgang wurden gleichzeitig die Dichtschnüre 8 mit einverseilt.

## Ansprüche

1. Elektrischer Freileiter mit einem durch rohrförmig zusammengefügte elektrisch leitfähige Profilelemente gebildeten Hohlraum, in welchem eine optische Nachrichtenleitung geführt ist, dadurch gekennzeichnet, daß die tangential aneinanderliegenden Seitenflächen der Profilelemente (1) in Längsrichtung verlaufende und sich gegenüberliegende Nuten (9) aufweisen, durch welche eine geschlossene Kammer gebildet ist, in welche eine elastisch komprimierte Dichtschnur (8) eingelegt ist.

2. Freileiter nach Anspruch 1, dadurch gekennzeichnet, daß die Innenkontur der Nuten (9) im wesentlichen rechteckig ist, daß die Dichtschnur (8) einen kreisförmigen Querschnitt hat mit einem Durchmesser (D), der im entspannten Zustand größer als die tangentiale lichte Weite (2T) der die Dichtschnur (D) aufnehmenden Kammer ist.

3. Freileiter nach Anspruch 2, dadurch gekennzeichnet, daß die Tiefe (T) der Nuten (9) weniger als das 0,4fache ihrer Breite (B) beträgt

4. Freileiter nach einem der Ansprüche 2 oder 3, dadurch gekennzeichnet, daß die Tiefe (T) der Nuten das 0,4 bis 0,48fache des Durchmessers (D) der Dichtschnur (8) beträgt.

5. Freileiter nach einem der Ansprüche 1 bis 4, dadurch gekennzeichnet, daß die Profilelemente (8) mit einer Schlaglänge vom 7 bis 10fache des Außendurchmesser (Da) des von ihnen gebildeten Hohlkörpers miteinander verdrallt sind.

Fig.1

Fig.2